(19) Europäisches Patentamt
European Patent Office
Office européen des brevets

(11) **EP 1 806 686 A1**

(12) **EUROPEAN PATENT APPLICATION**

(43) Date of publication:
**11.07.2007 Bulletin 2007/28**

(51) Int Cl.:
***G06Q 10/00*** *(2006.01)*

(21) Application number: **05111712.5**

(22) Date of filing: **05.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SAP AG**
**69190 Walldorf (DE)**

(72) Inventors:
• **Kreuels, Carsten**
**66497, Contwig (DE)**

• **von Helmolt, Hans-Ulrich**
**69126, Heidelberg (DE)**
• **Jaeck, Volker**
**69226, Nußloch (DE)**

(74) Representative: **Schneider, Günther Martin et al**
**Bettinger Schneider Schramm,**
**Patent- und Rechtsanwälte,**
**Postfach 86 02 67**
**81629 München (DE)**

(54) **Restriction of the number of locations**

(57)    A computer-implemented method for processing a customer order, the customer order specifying products and required quantities thereof, the products being located with at least one location, the method performing an availability check process in order to determine whether or not the ordered products are available with at least one location, wherein the availability check process comprising steps of performing an availability check for the products with the at least one location whereby each availability check creates a result which comprises product, location and available quantity, and replacing the products and locations if the sum of available quantities within the results does not correspond to the required quantities of products; arranging the result according to product and location; and selecting for further processing a plurality of results from the arranged results whereby the number of different locations or products within the selected plurality of results is predeterminable.

```
        ○
        │
        ▼
┌─────────────────────────────┐
│ performing availablity check│───300
└─────────────────────────────┘
        │
        ▼
┌─────────────────────────────┐
│ replacing products / locations│───310
└─────────────────────────────┘
        │
        ▼
┌─────────────────────────────┐
│      arranging results      │───320
└─────────────────────────────┘
        │
        ▼
┌─────────────────────────────────┐
│ selecting results out of the arranged│───330
│            results               │
└─────────────────────────────────┘
        │
        ▼
        ●
```

**Fig. 3**

**Description**

BACKGROUND OF THE INVENTION

The present invention relates to methods and systems for transporting products by an e-business system. More particularly, the present invention relates to methods and systems for transporting ordered products from a supplier to a customer.

Today, the success of a business company depends essentially on the requirement that customer demands on goods and/or services be fulfilled precisely, cost-efficiently and in time. Therefore, many companies make use of a supply chain management system to control and optimize their production and delivery processes.

Supply chain management may comprise the process of coordinating the flow of goods, services, information and/or finances between the involved parties such as manufactures, suppliers, wholesalers, retailers, and consumers. This process may include, among others, order processing, information feedback, and timely delivering the ordered goods and/or services. Supply chain management may also integrate and manage key processes along the supply chain.

The movement of products through a supply chain often involves the shipment of the products between the source location at which the product is produced or stored and the target location where the product is to be shipped such as the vendor or customer. The source location from which a set of products is shipped is usually selected based on the availability of the products at the source location.

In current supply chain management systems availability of an ordered quantity of products is checked within an availability check process. This availability check process is based on a list comprising a plurality of product locations which may be considered by the availability check. The availability check process determines which products from which locations are available in order to fulfill the customer order. The result of the availability check process may comprise a plurality of locations whereby each location provides only a part of the ordered quantity of products. These parts have to be merged in a special location or have to be shipped as partial deliveries from each location to the customer.

SUMMARY OF THE INVENTION

In general, in one aspect, a computer-implemented method for processing a customer order, the customer order specifying products and required quantities thereof, the products being located with at least one location, the method performing an availability check process in order to determine whether or not the ordered products are available with at least one location, wherein the availability check process comprising steps of
performing at least one availability check for the products with the at least one location whereby each availability check creates a result which comprises at least product, location and available quantity, and replacing the products and locations if the sum of available quantities within the results does not correspond to the required quantities of products;
arranging the at least one result according to product and location; and
selecting for further processing a plurality of results from the arranged results whereby at least one of the number of different locations and the number of different products within the selected plurality of results is predeterminable.

Further embodiments of the invention may comprise the following features:

In one embodiment of the invention, the at least one availability check may be performed based on at least one ATP rule, the at least one ATP rule indicates the object to be restricted within the selected plurality of results whereby the object is at least one of location and product.

Furthermore, the at least one ATP rule may indicate at least one of predeterminable number of different locations and predeterminable number of different products.

The at least one ATP rule may be determined by evaluating a rule strategy sequence, whereby the rule strategy sequence comprises at least one rule strategy and the at least one rule strategy comprises at least one ATP rule.

Further, the at least one rule strategy may indicate the object to be restricted within the selected plurality of results whereby the object is at least one of location and product.

The at least one rule strategy may indicate at least one of predeterminable number of different locations and predeterminable number of different products.

In one embodiment of the invention, the at least one rule strategy may indicate whether or not the at least one of predeterminable number of different locations and predeterminable number of different products and the object to be restricted of the at least one ATP rule are overwritten with the at least one of predeterminable number of different locations and predeterminable number of different products and the object to be restricted of the at least one rule strategy.

At least one of predeterminable number of different locations and predeterminable number of different products may comprise at least one of the values 'no restriction' and 'one different object'.

Furthermore, the method may perform an availability check with respect to all location products in order to determine the maximum available quantity for each location product.

In a further embodiment of the invention, the method may provide an interface for plugging in external programs for selecting the best result from the availability check process.

Furthermore, the method may comprise
a step of determining and evaluating at least one rule strategy; and
a step of determining and evaluating the ATP rules of the determined at least one rule strategy.

The method for each ATP rule may perform a step of determining the requirements of the ATP rule and the method for each requirement may perform
a step of checking availability for the required quantity of products;
a step of aggregating the confirmed quantities with respect to the location and storing the aggregation within a bucket; and
a step of checking whether or not the a bucket can provide the requested quantity.

In one embodiment of the invention, the actual requested quantity may be the difference between the required quantity of products and the stored confirmed quantity of products.

Furthermore, this invention provides an apparatus comprising
a data storage device which stores a plurality of ATP rules, a plurality of rule strategies, a plurality of rule strategy sequences and confirmed quantities;
means for determining at least one rule strategy sequence, at least one rule strategy and at least one ATP rule;
means for aggregating the confirmed quantities with respect to the location and storing the aggregation within a bucket;
means for determining the actual requested quantity; and
means for checking availability according to at least one of required quantity of products and actual requested quantity of products.

Furthermore, the means for determining the actual requested quantity and the means for checking availability are adapted to perform the steps according to the inventive method.

Further, this invention provides a computer-readable medium comprising computer-executable instructions for performing the method according to the inventive method, when loaded into a computer system.

The present invention provides many advantages.

One advantage is the possibility to restrict the number of different locations from which the products have to be shipped to the customer. Therefore it is possible to deliver products from one single location. It is also possible to restrict the number of different location products or different products during the availability check. Thus, it is possible to delivery only one specific products from only one specific location or only one specific product from different locations.

The inventive method can try a number of locations and check for each location several product alternatives. The confirmation may be added together.

Further, the inventive method allows to restrict the number of different locations, location products or products across several ATP rules in order to maximize the chance to get a confirmation for the ordered products.

BRIEF DESCRIPTION OF DRAWINGS

The accompanying drawings, which constitute a part of this disclosure, illustrate various embodiments and aspects of the present invention and, together with the description, explain the principles of the invention.

In the drawings:

Fig. 1    illustrates an overview of the inventive method;
Fig. 2    illustrates the relationship between rule strategy sequences, rule strategies and ATP rule;
Fig. 3    illustrates a block diagram of the inventive method;
Fig. 4    illustrates a first embodiment of a program flow according to the inventive method;
Fig. 5    illustrates a second embodiment of a program flow according to the inventive method; and
Fig. 6    illustrates an example according to the inventive method.

DETAILED DESCRIPTION

Often it is necessary for an enterprise to ship the ordered products from only one single location, for example warehouse, distribution centre or manufacturing plant, to the customer or to the target location. The same may be true for products in a location. In this case the company may ship only one specific product from a specific location to the customer or to the target location. This means that a required quantity of only one specific product should be available in exactly one location. This specific product may be also an alternative product, but it should be exactly one specific product, shipped from one specific location to the customer or to the target location.

A reason may be the need to transport the ordered products with just one delivery to a target location. This may reduce transportation costs, storage costs and delivery times. Furthermore a consolidation of a plurality of part deliveries can be avoided. Often it is more economic to transport a plurality of products as a single delivery from a distant location with reference to the target location as than partial deliveries from several close locations with reference to the target location.

A further reason may be the availability of several transportation means at several product locations. For example, for an emergency order may be needful that transportation means like a train or airplane is available at the product location. In such a case all the ordered products should be delivered from this special product location to the target location.

This may be done by restricting the number of different locations, the number of different products or the number of location products within the result list of an availability check.

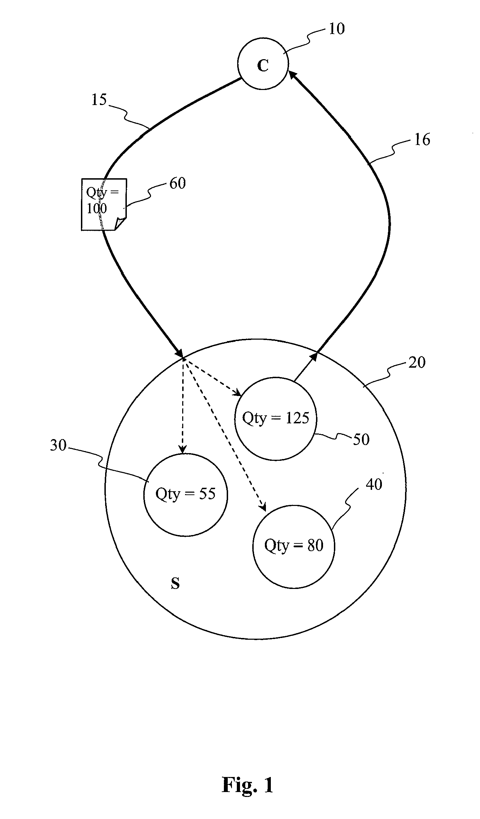

Fig. 1 shows a scenario in which the inventive method is applied. The customer 10 sends 15 an order 60 to the supplier 20. The customer order specifies a quantity of 100 pieces of a product. In this example, the customer wishes that all the ordered products are delivered in one single delivery to him. In order to meet the customer requirement, the supplier 20 tries to fulfill the customer order by checking the availability in several product locations 30, 40 and 50. Product location 30 provides 55 pieces, product location 40 provides 80 pieces and product location 50 provides 125 pieces of the ordered product. The availability check for product location 30 confirms a quantity of 55 pieces, the availability check for product location 40 confirms a quantity of 80 pieces. The product location 50 confirms a quantity of 125 pieces. Therefore, the supplier 20 can fulfill the customer requirement by delivering 16 the ordered products as a single delivery from the product location 50 to the customer 10. The product locations 30, 40, 50 may be warehouses in different regions or different countries.

Which locations are included into the availability check, is defined in a plurality of ATP rules. An ATP rule is a customizing setting for a rules-based availability check. In one embodiment, an ATP rule comprises all combinations of products and locations to be checked. Additionally, an ATP rule describes how the combinations of products and locations should be evaluated. The rules-based availability check is an iterative availability check process driven by a plurality of ATP rules. The result of one step determines whether and how the availability check process should be continued. For example:

- Is the product P available in location L?
- If not, is an alternative product AP available in location L?
- If not, is the product P available in an alternative location AL?
- If not, is an alternative product AP available in an alternative location AL?
- If not, a production process is triggered.

In this example, both the alternative product AP and the alternative location AL are part of the ATP rule.

Determination of the ATP rules which are to be applied in the availability check is done based on a plurality of parameters, for example customer or order fields. For example, for the customer A the ATP rule RA may be relevant, whereas for the customer B the ATP rule RB may be relevant. The ATP rule RA defines the locations L1 and L2 which have to be checked during an availability check, and the ATP rule RB defines the location L3. Therefore, a customer order coming from customer A is checked, according to the ATP rule RA, against the locations L1 and L2. The ATP rules may also define alternative products for products which are temporarily not available or for products for which successor products or product variants are available. Furthermore, the ATP rules may also define alternative product locations, for example if a product location is not available because of maintenance or natural disasters. With a supply chain management system a plurality of rule strategy sequences may be defined, consisting of a plurality of rule strategies. Each rule strategy consists of a plurality of ATP rules.

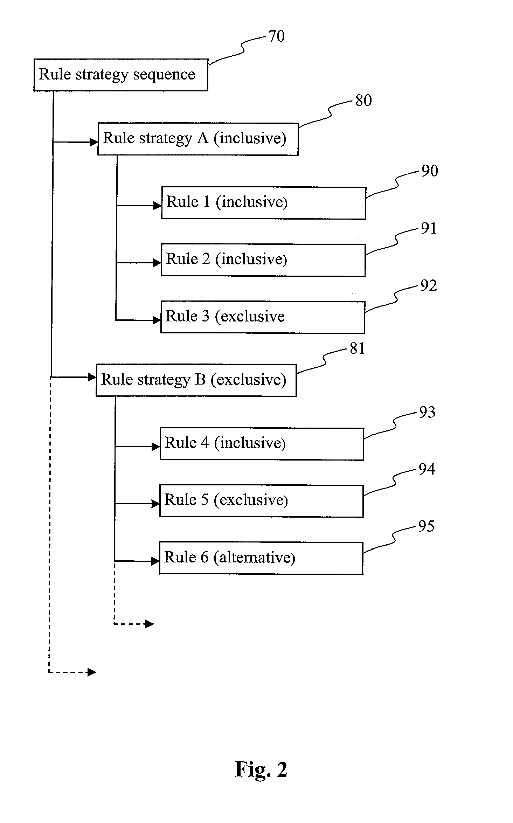

Fig. 2 shows the relationship between the rule strategy sequence, the rule strategies and the rules. A rule strategy sequence 70 comprises a plurality of rule strategies 80 and 81. A rule strategy can be of the type 'inclusive' or 'exclusive'. A rule strategy sequence must comprise at least one rule strategy of type inclusive.

An inclusive rule strategy A 80 defines which locations or products should be taken into account by the availability check. An exclusive rule strategy B 81 defines which locations or products should be excluded from the availability check. For example, if the inclusive rule strategy comprises the locations L1, L2 and L3 and the exclusive rule strategy comprises the location L2, then the locations L1 and L3 have to be considered by the availability check but not location L2. Locations and products according to a rule strategy are given by the corresponding rules.

The rule strategy A 80, which is an inclusive rule strategy, comprises a plurality of rules 90, 91 and 92. Each of these rules may be of the type 'inclusive' or 'exclusive', whereby at least one inclusive rule has to be assigned to the inclusive rule strategy A 80.

An inclusive rule 90, 91 within an inclusive rule strategy 80 defines which location or products should be considered by the availability check. An exclusive rule 92 within an inclusive rule strategy 80 defines which products or location has to be excluded from the availability check. For example, if the inclusive rule 90 defines the locations L1 and L2, the inclusive rule 91 the location L3 and the exclusive rule 92 the locations L1 and L3, then the location L2 has to be considered by the availability check. This means that the exclusive rules of an inclusive rule strategy are applied to the inclusive rules of this rule strategy.

The rule strategy B 81, which is an exclusive rule strategy, comprises a plurality of rules 93, 94 and 95. Each of these rules may be of the type 'inclusive', 'exclusive' or 'alternative'.

The inclusive rule 93 within an exclusive rule strategy defines products and locations which are excluded from the availability check. Therefore, the exclusive rule 94 within an exclusive rule strategy defines an exclusion from the exclusion given by the inclusive rule 93. In this way exclusions from exclusion may be modelled. For example, if the inclusive rule 93 defines the locations L1 and L2 to be excluded from the availability check and the exclusive rule 94 defines the location L1 as exclusion, then the location L1 has to be considered by the availability checked, even if L1 is excluded by rule 93. The alternative rule 95 within an exclusive rule strategy 81 defines alternative locations or products for locations or products which are excluded by the inclusive rule 93. This means that the exclusive rules and the alternative rules of an exclusive rule strategy are applied to the inclusive rules of this rule strategy.

The exclusive rule strategies are applied to the inclusive rule strategy.

In one embodiment, rule strategies and the rules may be determined using the condition technique. The condition technique provides means for selecting a set of rule strategies or a set of rules according to a plurality of parameters, for example product A and location L1 or other customer related properties, and a plurality of access sequences. Therefore, the locations and products according to a rule strategy sequence may depend on various customer and order related properties.

In order to fulfill the requirement, that the ordered products are shipped only from a predetermined number of locations to the customer, the ATP rules and the rule strategies comprise several attributes which are evaluated during the determination of the rule strategies and the ATP rules.

An ATP rule comprises the attributes

- maximum number of substitutions (technical name: NRECS) and
- restricted object.

The field 'Maximum number of substitutions' (NRECS) defines how many substitutions of the original location, product or location product are allowed to be part of the total confirmation of an availability check. Substitutions in this context means how many different products, locations or location products the resulting list of an availability check can have. It is possible to have no restrictions (NRECS = 0 equivalent to NRECS = No restriction) or to restrict the number of substitutions to a predefined number. In one embodiment for example, the maximum number of substitutions may be set equal to 1 (NRECS = 1). If the maximum number of substitutions is set equal to 1, the total confirmation of an availability check comprises only products out of exactly one location or exactly one product out of a specific location. Exactly one location means that the total confirmation comprises products only from one location. Exactly one product out of a specific location means that the total confirmation comprises only one single product from one specific location. Which product alternative is selected does not matter, but it should be only one single product from one single location.

In order to differentiate between restriction of location, restriction of product, restriction of location product and no restriction, the attribute 'Restricted object' is defined and may be customized in an ATP rule. This attribute may have the following values:

- not defined,
- location,
- product, or
- location product.

The value 'not defined' means that the restricted object is not specified within the ATP rule, i.e. the values may come from a previous ATP rule or from a rule strategy. In the first case the ATP rule inherits the values for the fields 'Maximum number of substitutions' and 'Restricted object' from a previous ATP rule. If no previous ATP rule exists or a previous ATP rule has also the value 'not defined' set for the field 'Restricted object', than the ATP rule behaves as if the value 'no restriction' would have been set for the field 'Maximum number of substitutions'. This means that no restriction is specified.

The values 'location', 'product' and 'location product' mean that the total confirmation is restricted according to the object location, product and location product.

A rule strategy may comprise the attributes

- Maximum number of substitutions (NRECS),
- Restricted object, and
- Activation flag

The meaning of the attributes 'Maximum number of substitutions' and 'Restricted object' is the same as described above for ATP rules. For the rule strategy the attribute 'Restricted object' can have the following values:

- location,
- product, or
- location product.

These attributes, defined on a rule strategy, are considered across all rules defined for a rule strategy. This means, that the attributes on a rule strategy level overwrite the attributes on rule level. A further attribute, the activation flag, is used to activate these attributes on rule strategy level. If the activation flag is not set on rule strategy level, the values on rule level are used even if on rule strategy level values for these attributes have been set. If the activation flag is set on rule strategy level than the values of the rule strategy are used in all ATP rules of this rule strategy.

These attributes are considered only for the above mentioned inclusive rule strategies because exclusive rule strategies are not used for checking the availability but only to reduce the possible number products, locations or location products.

All possible combinations of the attributes are valid and shown in the following Table 1.

Table 1

| Activation flag | Restricted entity | Maximum number of substitution | Possible result |
|---|---|---|---|
| - | - | - | Values at rule level are used |
| set | Location | No restriction | No restriction at all |
| | | 1 substitution only | Only one single location in result |
| | Location product | No restriction | No restriction at all |
| | | 1 substitution only | Only one single location product at all |
| | Product | No restriction | No restriction at all |
| | | 1 substitution only | Only one single product in result |

The following example demonstrates how these attributes work on rule strategy level and shows the difference to the attributes on rule level.

An evaluation of the rule strategy RS1 leads to the ATP rules Rule1 and Rule2. The required or ordered quantity is 100 pieces. The subsequent availability check leads to the following results:

Rule1:   P1 / L1   20 pieces confirmed
       P1 / L2   80 pieces confirmed
Rule2:   P2 / L1   50 pieces confirmed    Px / Ly describes the product x in location y
       P3 / L1   30 pieces confirmed

If the activation flag on rule strategy RS1 is not set and the restriction '1 substitution only' for the restricted object 'Location' is set on each ATP rule then there would be no final confirmation.

According to the Rule1 only 20 pieces in location L1 or 80 pieces in location L2 could be confirmed. According to the Rule2 only 80 pieces in location L1 could be confirmed.

If the same restrictions are set on rule strategy RS1 and if the activation flag on rule strategy RS1 is also set, then the complete 100 pieces could be confirmed with products P1, P2 and P3 in Location L1:

P1 / L1   20 pieces confirmed
P2 / L1   50 pieces confirmed
P3 / L1   30 pieces confirmed

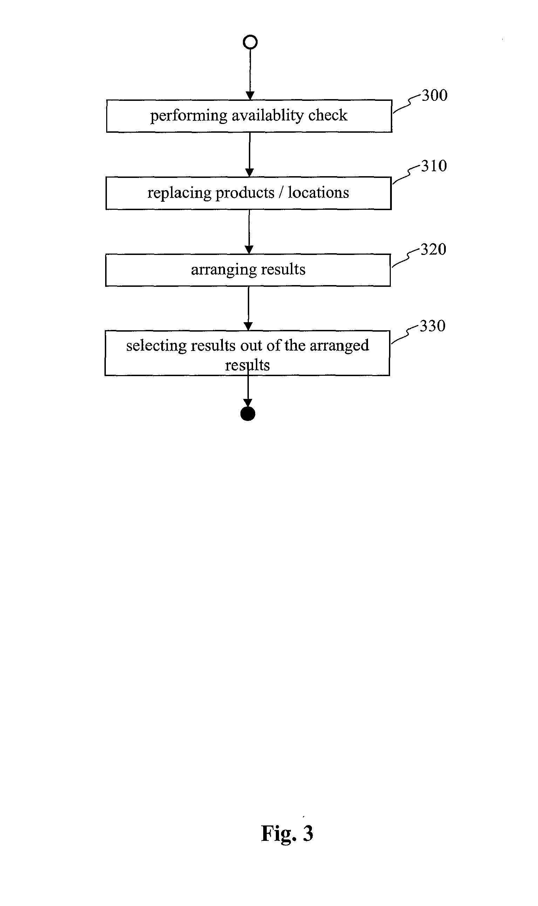

Fig. 3 shows an overview of the inventive method as a block diagram. The method starts with step 300 by checking the availability of the ordered products according to the customer order. Checking availability creates a result which comprises the products, location and available quantity. If the ordered products are not available or available only in part within the checked location, the method performs a step 310 of replacing the product and/or the location with another product and/or location, respectively. The replacement is done according to the ATP rules. After replacing product and/or location the method performs a further availability check with the replaced product and/or location. After checking availability of each product with each location according to the ATP rules step 320 is performed.

In step 320 the results of the availability checks are arranged according to product and location. Thus, an ordered list of products is build up. In one embodiment, the results are inserted after each availability check into the arranged result, whereby the arrangement of the results survives.

Within the next step 330, a plurality of results is selected from the arranged results, whereby the number of different locations and/or products with the selected results corresponds to a predetermined number of different locations and/or results. In one embodiment, this step 330 may be performed after each availability check in order to minimize the number of availability checks.

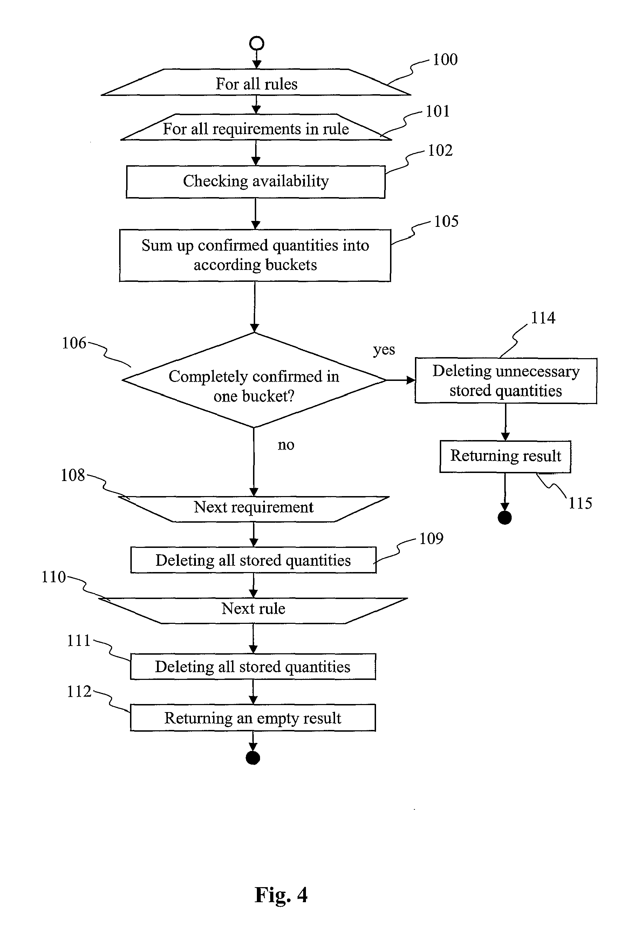

Fig. 4 shows a program flow according to the inventive method, whereby the activation flag on the rule strategy is not set. Therefore, as described above, the attribute values are not overwritten by the respective rule strategy and the attribute values defined on each ATP rule are used.

The availability check process calls a rule determination method which determines a rule strategy sequence and a plurality of rule strategies. The result of the rule determination method is a set of ATP rules. This set of ATP rules is one of the input parameters of the inventive method called by the ATP controller. Further input parameters may be the required quantity of products. The ATP controller may be an external program which triggers the inventive method.

For each rule 100, the method determines a plurality of requirements. For each requirement 101 the method performs the steps 102 to 106. For each first requirement in step 102 the availability of the requested quantity of products is checked. For each location the confirmed quantities are stored in the respective buckets. The confirmed quantities within each bucket are summed up within the next step 105. Within the following step 106 it is checked whether a bucket can confirm the required quantity. If there exist a bucket which can confirm the required quantity the method proceeds with step 114 as described below.

Otherwise, the method continues by processing the next requirement, step 108.

Using the values stored in the buckets, the method calculates the 'actual requested quantity' according to the following formula 1:

$$ARQ_{LOC} = ORQ_{LOC} - ACQ_{LOC} \qquad \text{Formula 1}$$

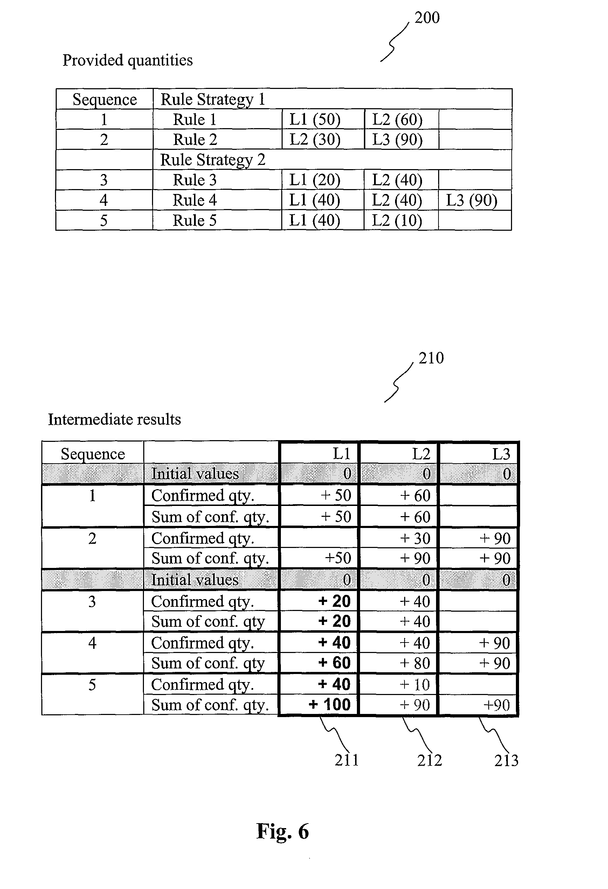

whereby $ARQ_{LOC}$ is the actual requested quantity for location LOC, $ORQ_{LOC}$ is original requested quantity for location LOC and $ACQ_{LOC}$ is the aggregated confirmed quantity of location LOC. A detailed description about these buckets is given below in Fig. 6. Within the first iteration the $ACQ_{LOC}$ is equal to zero for all locations.

The value of $ARQ_{LOC}$ is considered by the availability check during processing the next requirement. If this availability check confirms the $ARQ_{LOC}$ then the method goes to step 114. Now the method is able to build a resulting list containing only products from one location. All unnecessary stored quantities, i.e. all buckets for the other locations are deleted. In step 115 the resulting list is build and returned to the ATP controller. The method terminates and returns to the ATP controller.

If the whole $ARQ_{LOC}$ is not confirmed by the availability check, in the next step the confirmed quantity is stored in one of the said buckets. This is also shown below in Fig. 6. If the attribute 'restricted object' is set to the value 'location product', the confirmed quantity is not stored in the buckets. This means that while processing the next requirement the method considers the whole requested quantity. This is necessary to fulfill the condition that the result should contain exactly one product from one location. The technique of checking all location products with the original requested quantity and so to get the maximum possible quantity for each location product enables the search for an optimal confirmation result. The method provides means which enables to plugging in customer specific programs which may select the best or another result from the check results.

If further requirements exist 108, the method returns to step 101 and processes the next requirement. If not, all stored quantities in the buckets are discarded in step 109 and the next rule is processed.

After processing the last rule, the method removes all stored quantities from the buckets, in step 111, builds an empty resulting list, in step 112, and returns to the ATP controller.

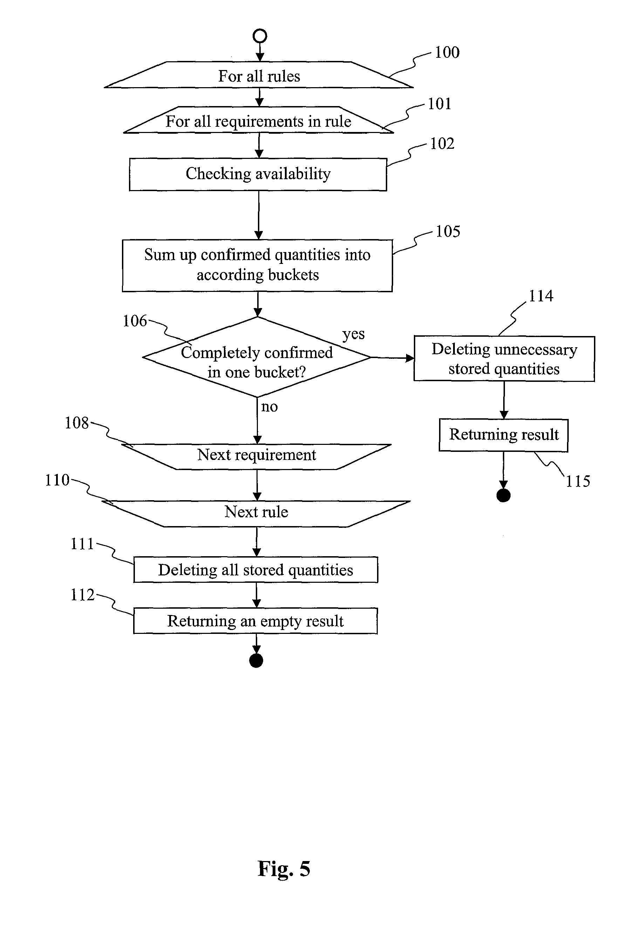

Fig. 5 shows a program flow according to the inventive method, whereby the activation flag on the rule strategy is set. Therefore, as described above, the attribute values are overwritten by the respective rule strategy. The difference between the program flow in Fig. 5 and the program flow shown in Fig. 4 is that the intermediate results in the buckets after processing all requirements of an ATP rule are not discarded. This way the method is able to determine products from one location across all ATP rules within one rule strategy.

The method, described in Fig. 4 and Fig. 5, may be executed for several rule strategies within a rule strategy sequence. If a further rule strategy is evaluated, then new buckets are created since the restriction does not work across rule strategies.

Fig. 6 shows an example according to the inventive method. The upper table 200 shows the confirmed quantities by the availability check according to the ATP rules Rule 1 to Rule 5. For example, the location L1 provides 50 pieces of a product according to the ATP rule Rule 1. Rule 1 and Rule 2 belong to Rule Strategy 1 and Rule 3 to Rule 5 belong to Rule Strategy 2. The first column 'Sequence' indicates the sequence in which the ATP rules are evaluated and checked for availability.

The lower table 210 shows the intermediate results according to the inventive method. In this example the attributes on the rule strategies are set to the following values:

- Maximum number of substitutions (NRECS) = 1
- Restricted object = Location
- Activation flag = Set

Since the activation flag is set on rule strategy level, the attribute values for the attributes 'Maximum number of substitutions' and 'Restricted object' on the ATP rules are overwritten by the values of the rule strategies.

The columns 211, 212, 213 represent the above mentioned buckets for the locations L1, L2 and L3. The column 'Sequence' shows the sequence in which the ATP rules are processed by the inventive method. During processing the ATP rules of a rule strategy, the method creates for each location, or in another embodiment for each location product, a bucket for storing the aggregated confirmed quantities (sum of confirmed quantities). Table 210 shows additionally the confirmed quantity for each location within each step. In one embodiment, the actual requested quantity may be stored also in the respective buckets (not shown in Fig. 6). The actual requested quantity is calculated according to the above mentioned Formula 1.

In this example the ordered quantity of a product is 100 pieces. Therefore the actual requested quantity within the first processing step (Sequence 1) is set equal to 100 for the locations L1 and L2. In the first processing step the ATP rule Rule 1 is evaluated, whereby the availability check confirms 50 pieces for location L1 and 60 pieces for location L2. These confirmed quantities are stored in the respective buckets (+ 50 and + 60).

In the second processing step (Sequence 2) the ATP rule Rule 2 is evaluated and checked. According to the requirements of Rule 2 the Location L3 has to be checked. Since the location L3 has not been checked during the first processing step, the method creates a new bucket for location L3 and the actual requested quantity for location L3 is set equal to 100. Within this second processing step for locations L2 and L3 30 and 90 pieces are confirmed respectively (+ 30 and + 90), whereby for location L2 the actual required quantity of 40 pieces (100 - 60) is used for checking the availability.

After each processing step the sum of confirmed quantities within each bucket is calculated. For example after the second processing step sum of confirmed quantities are +50, +90 and +90 for the locations L1, L2 and L3 respectively.

The Rule Strategy 1 is now completely evaluated and checked for availability. The location L1 can provide 50 pieces, the location L2 90 pieces (30 + 60) and the location L3 90 pieces. None of the locations can provide the whole quantity of 100 pieces. According to the Rule strategy 1, the method is not be able to confirm the ordered quantity of products from one location.

Since a second Rule Strategy 2 is maintained for the actual rule strategy sequence, the method continues by processing the ATP rules according the Rule Strategy 2. Prior to processing the third ATP rule Rule 3 (sequence 3), the method removes all entries from each existing buckets. In one embodiment the buckets as such may be deleted not only the entries. This means that the intermediate results for Rule Strategy 1 are invalid and the confirmed quantities are set equal to zero (Initial values in Table 210). During the third processing step, the ATP rule Rule 3, locations L1 and L2, has to be evaluated. The actual required quantities are set equal to 100 and an availability check is done considering the locations L1 and L2. For locations L1 and L2 20 pieces and 40 pieces (+ 20 and + 40) are confirmed respectively and stored in the respective buckets.

The fourth processing step (sequence 4) is performed in the same way as the second processing step: a bucket for L3 is created if there does not exist yet and the actual requested quantity for location L3 is set equal to 100. The actual requested quantities for location L2 and L3 are calculated according to the Formula 1 (80 = 100 - 20 and 60 = 100 - 40). The fourth processing step performs an availability check for the locations L1, L2 and L3 considering the actual requested quantities 80, 60 and 100. This processing step confirms 40, 40 and 90 pieces for the locations L1, L2 and L3.

These confirmations are used to calculate the actual requested quantities during the fifth processing step (Sequence 5). Now the sum of confirmed quantities according to the previous processing steps three and four are used to determine the new actual requested quantities for the locations. The aggregated quantities for the locations L1, L2 and L3 are 60 (20 + 40), 80 (40 + 40) and 90 (0 + 90). The new actual requested quantities are considered by the availability check within the processing step 5. The fifth processing step confirms 40 pieces for location L1 and 10 pieces for location L2.

The inventive method checks within each processing step after processing whether or not the location can fulfill the ordered quantity of products by calculating the sum of confirmed quantity. Within the fifth processing step, after checking the availability according to the location L1 and after storing the confirmed quantity (40) in the bucket, the method checks the aggregated quantity for location L1. The aggregated quantity of location L1 is the sum of the confirmed quantities (20 + 40 + 40) out of the first bucket 211. In this case the aggregated quantity is equal to 100 and therefore the location L1 can fulfill the ordered quantity. The method terminates and hands over to the calling system a resulting list containing all confirmations. Before returning to the calling system, the method removes all entries from the buckets 212 and 213. The remaining availability check for location L2 is not executed any more. This remaining availability check would confirm a quantity of 10 pieces.

The buckets may be implemented as a linked list whereby each item of the linked list comprises at least the confirmed quantity. Each list is identified by a location, a product or a location product.

In a further embodiment for the storage of the aggregated confirmed quantities per location or location product a global class is used. This class stores a table of locations and products. For each location or location product the aggregated confirmed quantities is stored. During evaluation process it is checked whether a restriction of location or location products is defined on the ATP rule or on the rule strategy which is actually evaluated. If such a restriction exists then for every evaluated ATP rule the above mentioned global class is called which checks whether or not an instance of the class itself has to be created. An instance of the class is created for every ATP rule if the restriction is defined on rule level. If the restriction is defined on rule strategy level, then a new class instance is only created for the rule strategy and not for the single ATP rule.

The determined or created class instance is then returned to the evaluation process. The ATP controller creates a requirement group and stores the reference to the class instance in the requirement group. That way each requirement group can access the right bucket via the class reference.

If the availability check confirms a partial confirmation, then the confirmed quantity is added to the aggregated confirmed quantity of the right location/product column of the class instance.

The class manages itself by keeping an account of all existing class instances per rule strategy or rule respectively, so the class knows itself if a new instance has to be created or an existing class instance has to be used and returned to rule evaluation process.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

In the foregoing specification, the invention has been described with reference to specific embodiments thereof. It will, however, be evident that various modifications and changes can be made thereto without departing from the broader spirit and scope of the invention as set forth in the appended claims. The specification and drawings are, accordingly, to be regarded in an illustrative rather than a restrictive sense.

**Claims**

1. A computer-implemented method for processing a customer order, the customer order specifying products and required quantities thereof, the products being located with at least one location, the method performing an availability check process in order to determine whether or not the ordered products are available with at least one location, wherein the availability check process comprising steps of:

   performing at least one availability check for the products with the at least one location whereby each availability check creates a result which comprises at least product, location and available quantity, and replacing the products and locations if the sum of available quantities within the results does not correspond to the required quantities of products;
   arranging the at least one result according to product and location; and
   selecting for further processing a plurality of results from the arranged results whereby at least one of the number of different locations and the number of different products within the selected plurality of results is predeterminable.

2. The computer-implemented method of claim 1, wherein the at least one availability check is performed based on at least one ATP rule, the at least one ATP rule indicates the object to be restricted within the selected plurality of results whereby the object is at least one of location and product.

3. The computer-implemented method of claim 2, wherein the at least one ATP rule further indicates at least one of predeterminable number of different locations and predeterminable number of different products.

4. The computer-implemented method of claim 3, wherein the at least one ATP rule is determined by evaluating a rule strategy sequence, whereby the rule strategy sequence comprises at least one rule strategy and the at least one rule strategy comprises at least one ATP rule.

5. The computer-implemented method of claim 4, wherein the at least one rule strategy indicates the object to be restricted within the selected plurality of results whereby the object is at least one of location and product.

6. The computer-implemented method of claim 5, wherein the at least one rule strategy further indicates at least one of predeterminable number of different locations and predeterminable number of different products.

7. The computer-implemented method of claim 6, wherein the at least one rule strategy indicates whether or not the at least one of predeterminable number of different locations and predeterminable number of different products and the object to be restricted of the at least one ATP rule are overwritten with the at least one of predeterminable number of different locations and predeterminable number of different products and the object to be restricted of the at least one rule strategy.

8. The computer-implemented method of claim 7, wherein at least one of predeterminable number of different locations and predeterminable number of different products comprises at least one of the values 'no restriction' and 'one different object'.

9. The computer-implemented method of claim 1, wherein the method performs an availability check with respect to all location products in order to determine the maximum available quantity for each location product.

10. The computer-implemented method of claim 1, wherein the method provides an interface for plugging in external programs for selecting the best result from the availability check process.

11. The computer-implemented method of claim 1, wherein the method further comprises:

a step of determining and evaluating at least one rule strategy; and
a step of determining and evaluating the ATP rules of the determined at least one rule strategy.

12. The computer-implemented method of claim 11, wherein the method for each ATP rule performs a step of determining the requirements of the ATP rule.

13. The computer-implemented method of claim 12, wherein the method performs for each requirement:

   a step of checking availability for the required quantity of products;
   a step of aggregating the confirmed quantities with respect to the location and storing the aggregation within a bucket; and
   a step of checking whether or not the a bucket can provide the requested quantity.

14. The computer implemented method of claim 13, wherein the actual requested quantity is the difference between the required quantity of products and the stored confirmed quantity of products.

15. An apparatus comprising
   a data storage device which stores a plurality of ATP rules, a plurality of rule strategies, a plurality of rule strategy sequences and confirmed quantities;
   means for determining at least one rule strategy sequence, at least one rule strategy and at least one ATP rule;
   means for aggregating the confirmed quantities with respect to the location and storing the aggregation within a bucket;
   means for determining the actual requested quantity; and
   means for checking availability according to at least one of required quantity of products and actual requested quantity of products.

16. The apparatus of claim 15, wherein the means for determining the actual requested quantity and the means for checking availability are adapted to perform the steps according to claim 1.

17. A computer-readable medium comprising computer-executable instructions for performing the method according to claim 1, when loaded into a computer system.

**Fig. 1**

Fig. 2

**Fig. 3**

For all rules — 100

For all requirements in rule — 101

Checking availability — 102

Sum up confirmed quantities into according buckets — 105

106 — Completely confirmed in one bucket?

yes

114

Deleting unnecessary stored quantities

Returning result

115

no

108 — Next requirement

Deleting all stored quantities — 109

110 — Next rule

111 — Deleting all stored quantities

112 — Returning an empty result

**Fig. 4**

**Fig. 5**

Provided quantities

/ 200

| Sequence | Rule Strategy 1 | | | |
|---|---|---|---|---|
| 1 | Rule 1 | L1 (50) | L2 (60) | |
| 2 | Rule 2 | L2 (30) | L3 (90) | |
| | Rule Strategy 2 | | | |
| 3 | Rule 3 | L1 (20) | L2 (40) | |
| 4 | Rule 4 | L1 (40) | L2 (40) | L3 (90) |
| 5 | Rule 5 | L1 (40) | L2 (10) | |

/ 210

Intermediate results

| Sequence | | L1 | L2 | L3 |
|---|---|---|---|---|
| | Initial values | 0 | 0 | 0 |
| 1 | Confirmed qty. | + 50 | + 60 | |
| | Sum of conf. qty. | + 50 | + 60 | |
| 2 | Confirmed qty. | | + 30 | + 90 |
| | Sum of conf. qty. | +50 | + 90 | + 90 |
| | Initial values | 0 | 0 | 0 |
| 3 | Confirmed qty. | + 20 | + 40 | |
| | Sum of conf. qty | + 20 | + 40 | |
| 4 | Confirmed qty. | + 40 | + 40 | + 90 |
| | Sum of conf. qty | + 60 | + 80 | + 90 |
| 5 | Confirmed qty. | + 40 | + 10 | |
| | Sum of conf. qty. | + 100 | + 90 | +90 |

211  212  213

# Fig. 6

**European Patent Office** | **DECLARATION** | **Application Number**

which under Rule 45 of the European Patent Convention shall be considered, for the purposes of subsequent proceedings, as the European search report

EP 05 11 1712

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | G06Q10/00 |

The claims of the application are formulated to merely specify commonplace features relating to matter excluded from patentability under Art. 52(2) and (3) EPC and its technological implementation. Due to the attendant lack of resolution of technical definition present, the search division could not establish a technical problem addressed in order to be able to carry out a meaningful search into the state of the art (Rule 45 EPC). See also Guidelines Part B Chapter VIII. Accordingly no search has been carried out.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| The Hague | 2 March 2006 | Cîrstet, A |

EPO FORM 1504 (P04C37)